# EUROPÄISCHE PATENTANMELDUNG

(11) **EP 3 511 570 A1**
(43) Veröffentlichungstag der Anmeldung: **17.07.2019**
(21) Anmeldenummer: 18020010.7
(22) Anmeldetag: 10.01.2018
(51) Int. Cl.: F04B 37/12, F04B 41/02, F04B 9/107, F04B 35/00, F17C 5/06, F17C 5/00

(54) **VERFAHREN ZUR VERDICHTUNG UND SPEICHERUNG EINES FLUIDS**

(71) Anmelder: Linde Aktiengesellschaft, 80331 München (DE)
(72) Erfinder: Adler, Robert, 2201 Gerasdorf (AT); Dorner, Sascha, 2440 Gramatneusiedl (AT); Nagl, Christoph, 2534 Alland (AT); Gruber, Sarah, 2380 Perchtoldsdorf (AT)

(57) **Zusammenfassung**

Die Erfindung betrifft ein Verfahren zur Verdichtung und Speicherung eines Fluids (F), wobei wiederholt Fluid (F) aus einer Fluidquelle (1) in einen ersten Verdichterraum (31) eingeleitet wird, wobei ein Verdichterkolben (30) eines Verdichters (3) durch das eingeleitete Fluid (F) so bewegt wird, dass sich das Volumen des ersten Verdichterraums (31) vergrößert, wobei anschließend der erste Verdichterraum (31) mit einem ersten Speicherraum (52,52a) in Strömungsverbindung gebracht wird, wobei Hydraulikfluid (H) aus einem Hydraulikfluidbehälter (9) in einen durch den Verdichterkolben (30) von dem ersten Verdichterraum (31) getrennten zweiten Verdichterraum (32) eingeleitet wird, und wobei der Verdichterkolben (30) durch das eingeleitete Hydraulikfluid (H) bewegt wird, so dass das Fluid (F) mittels des Verdichterkolbens (30) aus dem ersten Verdichterraum (31) verdrängt wird und in den ersten Speicherraum (52,52a) eingeleitet wird, so dass das Fluid (F) in dem ersten Speicherraum (52,52a) verdichtet wird.

## Beschreibung

Die Erfindung betrifft ein Verfahren zur Verdichtung und Speicherung eines Fluids.

Aus dem Stand der Technik sind hydraulisch angetriebene Verdichter (auch als Kolbenverdichter bezeichnet) bekannt. Diese weisen einen beweglichen Verdichterkolben (auch als Trennerkolben bezeichnet) auf, der einen ersten Verdichterraum von einem zweiten Verdichterraum trennt. Ein Fluid, das in dem ersten Verdichterraum zur Verfügung gestellt wird, kann durch Einleiten eines Hydraulikfluids in den zweiten Verdichterraum und Bewegen des Stempels durch das eingeleitete Hydraulikfluid verdichtet werden.

Weiterhin sind sogenannte Kolbenspeicher oder Konstantdruckspeicher zum Speichern von Fluiden aus dem Stand der Technik bekannt. Diese weisen einen beweglichen Speicherkolben (auch als Trennerkolben bezeichnet) auf, der einen ersten Speicherraum zur Speicherung des Fluids von einem zweiten Speicherraum zur Aufnahme eines Hydraulikfluids trennt. Wenn Fluid aus dem ersten Speicherraum abgezogen wird, kann durch Einleiten von Hydraulikfluid in den zweiten Speicherraum der Speicherkolben derart bewegt werden, dass der Druck des Fluids in dem ersten Speicherraum konstant bleibt. Dadurch liegt unabhängig vom Füllgrad des Speichers ein konstanter Druck in dem ersten Speicherraum vor.

Dies ist insbesondere dann vorteilhaft, wenn das Fluid unter Ausnutzung einer Druckdifferenz aus dem Speicher in einen anderen Behälter überführt werden soll, z.B. beim Betanken von Fahrzeugen.

Zudem haben Kolbenspeicher der beschriebenen Art den Vorteil, dass keine bzw. geringere Lastwechsel am Speicher auftreten. Dadurch ergibt sich ein längeres Speicherleben und eine geringere Belastung vorhandener Ressourcen.

Nach dem Stand der Technik sind außerdem Fahrzeuge bekannt, die mit gasförmigen Treibstoffen, z.B. Wasserstoff, Erdgas oder Methan, antreibbar sind. Entsprechende Tankstellen für diese Treibstoffe sind ebenfalls bekannt.

Die Infrastruktur für solche Gastankstellen (z.B. Wasserstofftankstellen) ist aktuell in den meisten Regionen noch nicht so stark ausgebaut, dass sich der Umstieg für den Großteil der Bevölkerung ohne Nachteile ergeben würde. Heimbefüllsysteme für gasförmige Treibstoffe wie Wasserstoff nach dem Stand der Technik erlauben lediglich geringe Durchflussmengen, wodurch die Einhaltung herstellerspezifischer Vorgaben unter diesen Umständen nicht erfolgen würde.

Insbesondere für Heimbefüllsysteme mit größeren Durchflussmengen wäre es vorteilhaft, Fluidspeicher (z.B. Konstantdruckspeicher) mit Verdichtern zu kombinieren. Dies erfordert jedoch bei Verwendung der Systeme nach dem Stand der Technik hohen konstruktiven Aufwand und relativ viel Platz.

Daher ist es die Aufgabe der vorliegenden Erfindung, ein Verfahren zur Verdichtung und Speicherung eines Fluids zur Verfügung zu stellen, das hinsichtlich der oben genannten Nachteile des Standes der Technik verbessert ist.

Diese Aufgabe wird durch das Verfahren nach Anspruch 1 gelöst. Vorteilhafte Ausführungsformen des Verfahrens sind in den Unteransprüchen 2 bis 11 angegeben. Die Erfindung wird im Folgenden beschrieben.

Ein erster Aspekt der Erfindung betrifft ein Verfahren zur Verdichtung und Speicherung eines Fluids, wobei
- ein Verdichter bereitgestellt wird, der einen im Verdichter bewegbaren Verdichterkolben aufweist, der so in dem Verdichter anordenbar ist, dass er einen ersten Verdichterraum von einem zweiten Verdichterraum trennt, wobei der zweite Verdichterraum mit einem Hydraulikfluidbehälter in Strömungsverbindung bringbar ist, so dass Hydraulikfluid aus dem Hydraulikfluidbehälter in den zweiten Verdichterraum einleitbar ist, und
- mindestens ein Speicher bereitgestellt wird, der einen im Speicher bewegbaren Speicherkolben aufweist, der so in dem Speicher anordenbar ist, dass er einen ersten Speicherraum von einem zweiten Speicherraum trennt, wobei der zweite Speicherraum mit dem Hydraulikfluidbehälter in Strömungsverbindung bringbar ist, so dass Hydraulikfluid aus dem Hydraulikfluidbehälter in den zweiten Speicherraum einleitbar ist, und wobei wiederholt
- Fluid aus einer Fluidquelle in den ersten Verdichterraum eingeleitet wird, wobei der Verdichterkolben durch das eingeleitete Fluid so bewegt wird, dass sich das Volumen des ersten Verdichterraums vergrößert, wobei sich insbesondere das Volumen des zweiten Verdichterraums verkleinert, und wobei anschließend
- der erste Verdichterraum mit dem ersten Speicherraum in Strömungsverbindung gebracht wird, wobei Hydraulikfluid aus dem Hydraulikfluidbehälter in den zweiten Verdichterraum eingeleitet wird, und wobei der Verdichterkolben durch das eingeleitete Hydraulikfluid bewegt wird, so dass das Fluid mittels des Verdichterkolbens aus dem ersten Verdichterraum verdrängt wird und in den ersten Speicherraum eingeleitet wird, so dass das Fluid in dem ersten Speicherraum verdichtet wird, insbesondere so dass in dem ersten Speicherraum ein im Vergleich zu dem Fluidspeicher erhöhter Druck herrscht.

Das erfindungsgemäße Verfahren lässt sich mit lediglich einem Hydraulikfluidbehälter und einer Hydraulikpumpe realisieren, welche Hydraulikfluid z.B. gesteuert über Ventile in den zweiten Verdichterraum und/oder in den zweiten Speicherraum des mindestens einen Speichers fördern kann. Dadurch können eine kompakte Bauform und ein geringerer Systemumfang als bei vergleichbaren Systemen erreicht werden. Dies ist besonders für Heimbefüllsysteme von Fahrzeugen und einfache Varianten von Gastankstellen mit geringen Kosten vorteilhaft.

Mit der wiederholten Durchführung der Schritte des Verfahrens ist gemeint, dass zunächst in einem ersten Schritt Fluid aus der Fluidquelle in den ersten Verdichterraum eingeleitet wird, wobei der Verdichterkolben durch das eingeleitete Fluid so bewegt wird, dass sich das Volumen des ersten Verdichterraums vergrößert, und anschließend in einem zweiten Schritt der erste Verdichterraum mit dem ersten Speicherraum in Strömungsverbindung gebracht wird, wobei Hydraulikfluid aus dem Hydraulikfluidbehälter in den zweiten Verdichterraum eingeleitet wird, und wobei der Verdichterkolben durch das eingeleitete Hydraulikfluid bewegt wird, so dass das Fluid mittels des Verdichterkolbens aus dem ersten Verdichterraum verdrängt wird und in den ersten Speicherraum eingeleitet wird, so dass das Fluid in dem ersten Speicherraum verdichtet wird, und wobei anschließend der erste und der zweite Schritt mindestens ein weiteres Mal ausgeführt werden.

Insbesondere weist der Verdichter den ersten und zweiten Verdichterraum auf. Das Volumen des ersten und zweiten Verdichterraums ist dabei von der Position des Verdichterkolbens im Verdichter abhängig.

Der Verdichter kann z.B. einen entlang einer Längsachse erstreckten Zylinder mit einem Mantel aufweisen, der einen Hohlraum umgibt, wobei der Verdichterkolben in dem Hohlraum entlang der Längsachse beweglich angeordnet ist.

Gemäß einer Ausführungsform ist, wenn sich der Verdichterkolben an einer ersten Endposition befindet, bei welcher der erste Verdichterraum ein maximales Volumen aufweist, kein zweiter Verdichterraum vorhanden.

Gemäß einer weiteren Ausführungsform ist kein erster Verdichterraum vorhanden, wenn sich der Verdichterkolben an einer zweiten Endposition befindet, bei welcher das Volumen des zweiten Verdichterraums maximal ist. In der Regel ist jedoch zumindest ein Totraum z.B. in Leitungen und Ventilen des Systems vorhanden, wenn sich der Verdichterkolben an der Endposition befindet.

Durch Bewegung des Verdichterkolbens vergrößert sich das Volumen des ersten Verdichterraums beim Einleiten des Fluids in den ersten Verdichterraum und das Volumen des zweiten Verdichterraums verkleinert sich entsprechend. Umgekehrt vergrößert sich das Volumen des zweiten Verdichterraums beim Einleiten des Hydraulikfluids in den zweiten Verdichterraum und das Volumen des ersten Verdichterraums verkleinert sich entsprechend.

Weiterhin weist insbesondere der mindestens eine Speicher den ersten und zweiten Speicherraum auf. Das Volumen des ersten und zweiten Speicherraums ist dabei von der Position des Speicherkolbens im Speicher abhängig.

Der mindestens eine Speicher kann z.B. einen entlang einer Längsachse erstreckten Zylinder mit einem Mantel aufweisen, der einen Hohlraum umgibt, wobei der Speicherkolben in dem Hohlraum entlang der Längsachse beweglich angeordnet ist.

Dabei ist gemäß einer weiteren Ausführungsform (ggf. bis auf einen Totraum) kein zweiter Speicherraum vorhanden, wenn sich der Speicherkolben an einer ersten Endposition befindet, bei welcher der erste Speicherraum ein maximales Volumen aufweist.

Gemäß einer weiteren Ausführungsform ist (ggf. bis auf einen Totraum) kein erster Speicherraum vorhanden, wenn sich der Speicherkolben an einer zweiten Endposition befindet, bei welcher das Volumen des zweiten Speicherraums maximal ist.

Durch Bewegung des Speicherkolbens vergrößert sich das Volumen des ersten Speicherraums beim Einleiten des Fluids in den ersten Speicherraum und das Volumen des zweiten Speicherraums verkleinert sich entsprechend. Umgekehrt vergrößert sich das Volumen des zweiten Speicherraums beim Einleiten des Hydraulikfluids in den zweiten Speicherraum und das Volumen des ersten Speicherraums verkleinert sich entsprechend.

Das Hydraulikfluid wird insbesondere mittels einer Hydraulikpumpe aus dem Hydraulikfluidbehälter in den zweiten Verdichterraum und/oder den zweiten Speicherraum eingeleitet.

Beim Einleiten des Fluids in den ersten Verdichterraum wird insbesondere der Verdichterkolben bewegt, so dass Hyraulikfluid aus dem zweiten Verdichterraum verdrängt und in den Hydraulikfluidbehälter eingeleitet wird. Ebenso kann beim Einleiten des Fluids in den ersten Speicherraum der Speicherkolben bewegt werden, so dass Hydraulikfluid aus dem zweiten Speicherraum verdrängt und in den Hydraulikfluidbehälter eingeleitet wird. Es versteht sich, dass nur dann Hydraulikfluid aus dem zweiten Verdichterraum bzw. aus dem zweiten Speicherraum verdrängt werden kann, wenn sich der Verdichterkolben bzw. der Speicherkolben noch nicht an der jeweiligen Endposition befindet, das heißt solange noch ein zweiter Verdichterraum bzw. zweiter Speicherraum vorhanden ist.

Insbesondere kann der Speicherkolben beim Einleiten des Fluids an einer Endposition anliegen, so dass sich der Speicherkolben beim Einleiten des Fluids in den ersten Speicherraum nicht bewegt, sondern sich durch das Einleiten des Fluids lediglich der Druck im ersten Speicherraum weiter erhöht.

Die Strömungsverbindungen zwischen dem Verdichter und dem mindestens einen Speicher sowie der Fluidquelle und dem Hydraulikfluidreservoir werden insbesondere durch geeignete Ventile (z.B. Rückschlag- und/oder Hydraulikventile) geöffnet oder geschlossen bzw. gedrosselt.

Gemäß einer Ausführungsform des Verfahrens wird eine Mehrzahl an Speichern bereitgestellt, wobei die Speicher jeweils einen im jeweiligen Speicher bewegbaren Speicherkolben aufweisen, der einen jeweiligen ersten Speicherraum von einem jeweiligen zweiten Speicherraum trennt, wobei der jeweilige zweite Speicherraum mit dem Hydraulikfluidbehälter in Strömungsverbindung bringbar ist, so dass Hydraulikfluid aus dem Hydraulikfluidbehälter in den jeweiligen zweiten Speicherraum einleitbar ist, und wobei der erste Verdichterraum parallel mit den jeweiligen ersten Speicherräumen in Strömungsverbindung gebracht wird, und wobei der Verdichterkolben durch das eingeleitete Hydraulikfluid bewegt wird, so dass das Fluid mittels des Verdichterkolbens aus dem ersten Verdichterraum verdrängt wird und gleichzeitig in die jeweiligen ersten Speicherräume eingeleitet wird, so dass das Fluid in den jeweiligen ersten Speicherräumen verdichtet wird.

Das heißt, statt des mindestens einen Speichers sind mehrere Speicher vorgesehen, die in einer fluidtechnischen Parallelschaltung gleichzeitig befüllt werden.

Dabei wird beim Einleiten des Fluids in die ersten Speicherräume insbesondere mittels der jeweiligen Speicherkolben Hydraulikfluid aus den jeweiligen zweiten Speicherräumen der Speicher verdrängt und in den Hydraulikfluidbehälter eingeleitet.

Gemäß einer weiteren Ausführungsform umfasst die besagte Mehrzahl an Speichern 2 bis 10 Speicher, insbesondere 2 bis 5 Speicher.

Gemäß einer weiteren Ausführungsform wird das Fluid gleichzeitig mit dem Einleiten des Fluids aus der Fluidquelle in den ersten Verdichterraum auch in den ersten Speicherraum, bzw. die jeweiligen ersten Speicherräume, eingeleitet.

Hierdurch wird die Effizienz des Systems gesteigert, da der bzw. die Speicher bereits im ersten Schritt parallel zum Verdichter mit dem Fluid teilweise gefüllt wird bzw. werden.

Gemäß einer weiteren Ausführungsform wird beim gleichzeitigen Einleiten des Fluids aus der Fluidquelle in den ersten Verdichterraum und den ersten Speicherraum, bzw. den jeweiligen ersten Speicherraum, der Speicherkolben, bzw. der jeweilige Speicherkolben, so bewegt, dass sich das Volumen des ersten Speicherraums, bzw. des jeweiligen ersten Speicherraums, vergrößert, wobei sich insbesondere das Volumen des zweiten Speicherraums bzw. des jeweiligen zweiten Speicherraums verkleinert. Dies ist insbesondere dann der Fall, wenn sich der jeweilige Speicherkolben beim Einleiten des Fluids noch nicht an der Endposition befindet.

Gemäß einer weiteren Ausführungsform wird nach dem Verdichten des Fluids der erste Speicherraum, bzw. der jeweilige erste Speicherraum, mit einem Tank eines Fahrzeugs in Strömungsverbindung gebracht, wobei das Fluid aus dem ersten Speicherraum, bzw. dem jeweiligen ersten Speicherraum, in den Tank eingeleitet wird.

Dabei kann das Fluid z.B. als Treibstoff bzw. Kraftstoff für das Fahrzeug dienen. Hierbei wird eine Druckdifferenz zwischen dem ersten Speicherraum und dem Tank ausgenutzt.

Gemäß einer weiteren Ausführungsform wird während des Einleitens des Fluids aus dem ersten Speicherraum bzw. dem jeweiligen ersten Speicherraum in den Tank Hydraulikfluid aus dem Hydraulikfluidbehälter in den zweiten Speicherraum bzw. den jeweiligen zweiten Speicherraum eingeleitet, wobei der Speicherkolben bzw. der jeweilige Speicherkolben durch das eingeleitete Hydraulikfluid bewegt wird, und wobei das Volumen des ersten Speicherraums bzw. des jeweiligen ersten Speicherraums durch die Bewegung des Speicherkolbens bzw. des jeweiligen Speicherkolbens so verkleinert wird, dass der Druck des Fluids in dem ersten Speicherraum bzw. dem jeweiligen ersten Speicherraum beim Einleiten des Fluids aus dem ersten Speicherraum bzw. dem jeweiligen ersten Speicherraum in den Tank konstant bleibt.

Das heißt der Speicher bzw. der jeweilige Speicher wird als sogenannter Konstantdruckspeicher betrieben.

Gemäß einer weiteren Ausführungsform ist das Fluid ein gasförmiger Kraftstoff zum Antreiben eines Fahrzeugs.

Gemäß einer weiteren Ausführungsform ist das Fluid oder der gasförmige Kraftstoff Wasserstoff, Methan oder Erdgas.

Gemäß einer weiteren Ausführungsform wird das Fluid in dem ersten Verdichterraum auf einen Druck von 400 bar bis 900 bar, insbesondere 700 bar bis 875 bar, verdichtet.

Gemäß einer weiteren Ausführungsform wird das Fluid in dem ersten Speicherraum bzw. dem jeweiligen ersten Speicherraum, bei einem Druck von 400 bar bis 900 bar, insbesondere 700 bar bis 875 bar, gespeichert.

Gemäß einer weiteren Ausführungsform wird das Fluid bei einem ersten Druck von 1 bar bis 45 bar, insbesondere 20 bar bis 45 bar, in der Fluidquelle bereitgestellt.

Gemäß einer weiteren Ausführungsform ist der erste Speicher dazu konfiguriert, 0,5 kg bis 5 kg, insbesondere 2 kg bis 4 kg des Fluids, aufzunehmen, wobei insbesondere das Fluid Wasserstoff ist.

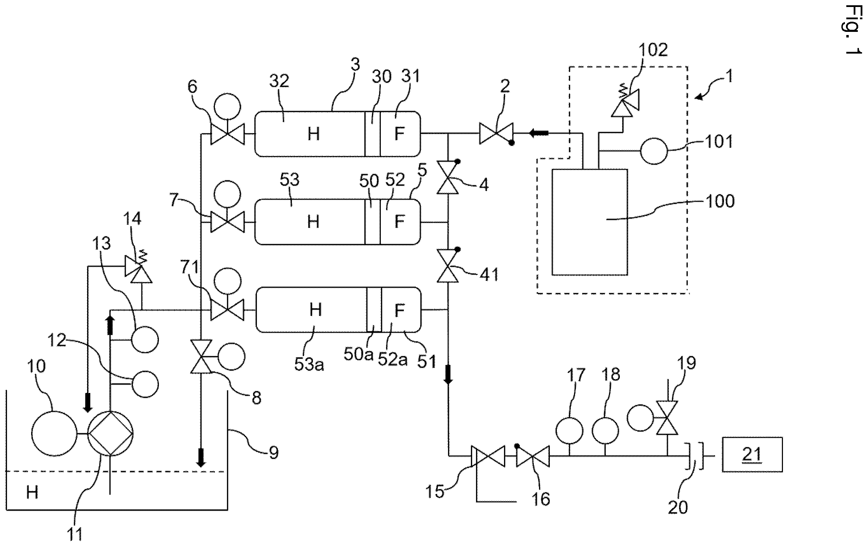

Weitere Ausführungsbeispiele der Erfindung werden im Folgenden anhand einer Zeichnung beschrieben. Dabei zeigt
- Fig. 1: eine schematische Darstellung eines Systems zur Verdichtung und Speicherung eines Fluids mittels des erfindungsgemäßen Verfahrens.

Figur 1 zeigt ein System zur Verdichtung und Speicherung eines Fluids F mit einer Fluidquelle 1, welche einen Fluidbehälter 100 zur Bereitstellung des Fluids F aufweist. Vorzugsweise ist das Fluid F ein gasförmiger Kraftstoff zum Antreiben eines Fahrzeugs 21, z.B. Wasserstoff, Methan oder Erdgas. Dabei kann z.B. Wasserstoff in dem Fluidbehälter 100 mittels Elektrolyse aus Wasser bereitgestellt werden.

Der Fluidbehälter 100 der Fluidquelle 1 ist über ein erstes Rückschlagventil 2 mit einem ersten Verdichterraum 31 eines Verdichters 3 zur Aufnahme des Fluids F in Strömungsverbindung bringbar. Die Fließrichtung des Fluids F ist dabei in Fig. 1 durch den Pfeil zwischen Fluidbehälter 100 und erstem Rückschlagventil 2 dargestellt. Das Fluid F wird in dem Fluidbehälter 100 insbesondere bei im Vergleich zu dem ersten Verdichterraum 31 erhöhtem Druck gespeichert, so dass das Fluid F aufgrund der Druckdifferenz aus dem Fluidbehälter 100 in den ersten Verdichterraum 31 strömen kann. Der Druck des Fluids F in dem Fluidbehälter 100 der Fluidquelle 1 kann dabei z.B. 45 bar betragen.

Die Fluidquelle 1 umfasst weiterhin einen dritten Drucksensor 101 zur Messung des Drucks in dem Fluidbehälter 100 sowie ein zweites Druckbegrenzungsventil 102, durch das bei Überschreitung eines mittels des dritten Drucksensor 101 gemessenen Grenzdrucks des Fluids F Fluid F ausströmen kann, z.B. in die Umgebung oder in einen weiteren Behälter.

Der Verdichter 3 ist als sogenannter Kolbenverdichter ausgebildet, das heißt, der Verdichter 3 weist einen in dem Verdichter 3 bewegbaren Verdichterkolben 30 auf, welcher den ersten Verdichterraum 31 von einem zweiten Verdichterraum 32 zur Aufnahme eines Hydraulikfluids H (z.B. eines Hydrauliköls) trennt.

Beispielsweise kann der Verdichter 3 einen entlang einer Längsachse erstreckten Zylinder aufweisen, wobei der Zylinder einen Mantel aufweist, der einen Mantelraum umgibt, wobei der Verdichterkolben 30 in dem Mantelraum entlang der Längsachse beweglich gelagert ist. Dabei teilt der Verdichterkolben 30 den Mantelraum in den ersten Verdichterraum 31 und den zweiten Verdichterraum 32 auf.

Der zweite Verdichterraum 32 steht über ein erstes Hydraulikventil 6 und ein Hydraulikrücklaufventil 8 mit einem Hydraulikfluidbehälter 9 zur Aufnahme des Hydraulikfluids H in Strömungsverbindung. Dabei gibt der Pfeil zwischen Hydraulikrücklaufventil 8 und Hydraulikfluidbehälter 9 die Fließrichtung des Hydraulikfluids H an, wenn das Hydraulikfluid H, z.B. beim Befüllen des Verdichters 3 und/oder der Speicher 5,51 mit Fluid F aus der Fluidquelle 1, durch Bewegung des Verdichterkolbens 30, des Speicherkolbens 50 und/oder des Speicherkolbens 50a aus dem zweiten Verdichterraum 32, dem zweiten Speicherraum 53 und/oder dem zweiten Speicherraum 53a in den Hydraulikfluidbehälter 9 fließt. Die gestrichelte Linie in dem Hydraulikfluidbehälter 9 zeigt einen beispielhaften Pegel des Hydraulikfluids H in dem Hydraulikfluidbehälter 9.

Weiterhin ist eine durch einen Motor 10 antreibbare Hydraulikpumpe 11 vorgesehen, die dazu ausgebildet ist, das Hydraulikfluid H aus dem Hydraulikfluidbehälter 9 zu fördern und über das erste Hydraulikventil 6 in den zweiten Verdichterraum 32 zu pumpen.

Stromab der Hydraulikpumpe 11 sind ein erster Temperatursensor 12 zur Messung der Temperatur des Hydraulikfluids H und ein erster Drucksensor 13 zur Messung des Drucks des Hydraulikfluids H angeordnet. Mit dem Pumpenausgang der Hydraulikpumpe 11 ist außerdem ein Druckbegrenzungsventil 14 verbunden, durch das bei Überschreitung eines Grenzdrucks des Hydraulikfluids H Hydraulikfluid H ausströmen kann. Der Pfeil stromab des ersten Drucksensors 13 gibt die Fließrichtung des Hydraulikfluids H beim Pumpen mittels der Hydraulikpumpe 11 an.

Die Fig. 1 zeigt weiterhin einen ersten Speicher 5 mit einem Speicherkolben 50, der einen jeweiligen ersten Speicherraum 52 zur Aufnahme des Fluids F von einem jeweiligen zweiten Speicherraum 53 zur Aufnahme des Hydraulikfluids H trennt, sowie einen zweiten Speicher 51, der einen Speicherkolben 50a aufweist, wobei der Speicherkolben 50a des zweiten Speichers 51 einen jeweiligen ersten Speicherraum 52a zur Aufnahme des Fluids F von einem jeweiligen zweiten Speicherraum 53a zur Aufnahme des Hydraulikfluids H trennt.

Dabei sind der Verdichter 3, der erste Speicher 5 und der zweite Speicher 51 strömungstechnisch parallel geschaltet, wobei der erste Verdichterraum 31 des Verdichters 3 über ein zweites Rückschlagventil 4 mit dem ersten Speicherraum 52 des ersten Speichers 5 verbunden ist und der zweite Verdichterraum 32 über das erste Hydraulikventil 6 und ein zweites Hydraulikventil 7 mit dem zweiten Speicherraum 53 des ersten Speichers 5 verbunden ist. Der erste Speicherraum 52 des ersten Speichers 5 ist weiterhin über ein viertes Rückschlagventil 41 mit dem ersten Speicherraum 52a des zweiten Speichers 51 strömungstechnisch verbunden und der zweite Speicherraum 53 des ersten Speichers 5 steht über das zweite Hydraulikventil 7 und ein drittes Hydraulikventil 71 mit dem zweiten Speicherraum 53a des zweiten Speichers 51 in Strömungsverbindung.

Alternativ zu der in Fig. 1 gezeigten Anordnung können auch weitere Speicher vorgesehen sein, die analog zu dem hier gezeigten ersten Speicher 5 und dem zweiten Speicher 51 parallel geschaltet sind.

Zwischen dem vierten Rückschlagventil 41 und dem ersten Speicherraum 52a zweigt eine Fluidleitung ab, die über ein gesteuertes Ventil 15 (z.B. ein Magnet- oder Pneumatikventil) und ein drittes Rückschlagventil 16 zu einer Kupplung 20 zum Anschließen an einen Tank eines Fahrzeugs 21 führt. Somit kann das Fahrzeug 21 mit dem Fluid F, z.B. als Treibstoff, betankt werden. Weiterhin sind ein zweiter Drucksensor 17 zur Messung des Drucks des Fluids F und ein zweiter Temperatursensor 18 zur Messung der Temperatur des Fluids F stromauf der Kupplung 20 vorgesehen. Ein gesteuertes Entlastungsventil 19 (z.B. ein Magnet- oder Pneumatikventil) erlaubt die Entlastung der Leitung, insbesondere nach dem Tankvorgang. Der Pfeil zwischen dem vierten Rückschlagventil 41 und dem gesteuerten Ventil 15 gibt die Fließrichtung des Fluids F beim Betanken an.

Bei dem erfindungsgemäßen Verfahren fördert die Fluidquelle 1 zunächst gleichzeitig Fluid F durch das erste Rückschlagventil 2 in den ersten Verdichterraum 31 des Verdichters 3 und (optional) die jeweiligen ersten Speicherräume 52,52a der Speicher 5,51. Das erste Hydraulikventil 6, das Hydraulikrücklaufventil 8, das zweite Hydraulikventil 7 und das dritte Hydraulikventil 71 sind dabei geöffnet, wobei das gesteuerte Ventil 15 geschlossen ist.

Das in den ersten Verdichterraum 31 und die ersten Speicherräume 52,52a einströmende Fluid F schiebt dabei die Speicherkolben 50,50a der Speicher 5,51 und den Verdichterkolben 30 des Verdichters 3 in die Endlage (links in Fig. 1), sodass Hydraulikfluid H durch das erste Hydraulikventil 6, das Hydraulikrücklaufventil 8, das zweite Hydraulikventil 7 und das dritte Hydraulikventil 71 in den Hydraulikfluidbehälter 9 ausgeschoben wird.

Sobald die Endlage des Verdichterkolbens 30 und der Speicherkolben 50,50a erreicht ist, werden das Hydraulikrücklaufventil 8, das zweite Hydraulikventil 7 und das dritte Hydraulikventil 71 geschlossen und der Motor 10 und somit die Hydraulikpumpe 11 gestartet. Dadurch fließt Hydraulikfluid H über das erste Hydraulikventil 6 in den zweiten Verdichterraum 32 und der Verdichterkolben 30 wird (in Fig. 1 nach rechts) bewegt.

Der Verdichter 3 fördert nun Fluid F durch das erste Rückschlagventil 4 und das vierte Rückschlagventil 41 in die ersten Speicherräume 52,52a der Speicher 5,51. Sobald der Verdichterkolben 30 seine Endlage (rechts in Fig. 1) erreicht hat, werden das erste Hydraulikventil 6 und das Hydraulikrücklaufventil 8 geöffnet und der Verdichterkolben 30 des Verdichters 3 wandert erneut in seine Endlage (nach links in Fig. 1), während Fluid F aus der Fluidquelle 1 in den ersten Verdichterraum 31 nachströmt. Dieser Vorgang wird so lange wiederholt, bis der erste Drucksensor 13 einen gewünschten Druck misst, der dem Speicherdruck in den ersten Speicherräumen 52,52a der Speicher 5,51 erreicht hat.

Anschließend wird die Hydraulikpumpe 11 heruntergefahren, bis es zur Betankung kommt. Zur Befüllung eines Fahrzeugs 21 mit dem Fluid F werden nun das zweite Hydraulikventil 7, das dritte Hydraulikventil 71 und das gesteuerte Ventil 15 geöffnet und die Hydraulikpumpe 11 wird hochgefahren, so dass Fluid F entsprechend dem Speicherdruck durch das gesteuerte Ventil 15, das dritte Rückschlagventil 16 und die Kupplung 20 in den Tank des Fahrzeugs 21 strömt. Sobald der gewünschte Zieldruck im Fahrzeug 21 gemessen durch den zweiten Drucksensor 17 erreicht ist, wird das gesteuerte Ventil 15 geschlossen, während das gesteuerte Entlastungsventil 19 geöffnet wird, wodurch die Kupplung 20 entlastet und entkuppelbar und somit vom Fahrzeug 21 trennbar wird.

**Bezugszeichenliste**

| | |
|---|---|
| 1 | Fluidquelle |
| 2 | Erstes Rückschlagventil |
| 3 | Verdichter |
| 4 | Zweites Rückschlagventil |
| 5, 51 | Speicher |
| 6 | Erstes Hydraulikventil |
| 7 | Zweites Hydraulikventil |
| 8 | Hydraulikrücklaufventil |
| 9 | Hydraulikfluidbehälter |
| 10 | Motor |
| 11 | Hydraulikpumpe |
| 12 | Erster Temperatursensor |
| 13 | Erster Drucksensor |
| 14 | Erstes Druckbegrenzungsventil |
| 15 | Gesteuertes Ventil |
| 16 | Drittes Rückschlagventil |
| 17 | Zweiter Drucksensor |
| 18 | Zweiter Temperatursensor |
| 19 | Gesteuertes Entlastungsventil |
| 20 | Kupplung |
| 21 | Fahrzeug |
| 30 | Verdichterkolben |
| 31 | Erster Verdichterraum |
| 32 | Zweiter Verdichterraum |
| 41 | Viertes Rückschlagventil |
| 50, 50a | Speicherkolben |
| 52,52a | Erster Speicherraum |
| 53,53a | Zweiter Speicherraum |
| 71 | Drittes Hydraulikventil |
| 100 | Fluidbehälter |
| 101 | Dritter Drucksensor |
| 102 | Zweites Druckbegrenzungsventil |
| F | Fluid |
| H | Hydraulikfluid |

## Patentansprüche

1. Verfahren zur Verdichtung und Speicherung eines Fluids (F), wobei
a. ein Verdichter (3) bereitgestellt wird, der einen im Verdichter (3) bewegbaren Verdichterkolben (30) aufweist, der so in dem Verdichter (3) anordenbar ist, dass er einen ersten Verdichterraum (31) von einem zweiten Verdichterraum (32) trennt, wobei der zweite Verdichterraum (32) mit einem Hydraulikfluidbehälter (9) in Strömungsverbindung bringbar ist, so dass Hydraulikfluid (H) aus dem Hydraulikfluidbehälter (9) in den zweiten Verdichterraum (32) einleitbar ist, und wobei
b. mindestens ein Speicher (5,51) bereitgestellt wird, der einen im Speicher (5,51) bewegbaren Speicherkolben (50,50a) aufweist, der so in dem Speicher (5,51) anordenbar ist, dass er einen ersten Speicherraum (52,52a) von einem zweiten Speicherraum (53,53a) trennt, wobei der zweite Speicherraum (53,53a) mit dem Hydraulikfluidbehälter (9) in Strömungsverbindung bringbar ist, so dass Hydraulikfluid (H) aus dem Hydraulikfluidbehälter (9) in den zweiten Speicherraum (53,53a) einleitbar ist, und wobei wiederholt
c. Fluid (F) aus einer Fluidquelle (1) in den ersten Verdichterraum (31) eingeleitet wird, wobei der Verdichterkolben (30) durch das eingeleitete Fluid (F) so bewegt wird, dass sich das Volumen des ersten Verdichterraums (31) vergrößert, wobei anschließend
d. der erste Verdichterraum (31) mit dem ersten Speicherraum (52,52a) in Strömungsverbindung gebracht wird, wobei Hydraulikfluid (H) aus dem Hydraulikfluidbehälter (9) in den zweiten Verdichterraum (32) eingeleitet wird, und wobei der Verdichterkolben (30) durch das eingeleitete Hydraulikfluid (H) bewegt wird, so dass das Fluid (F) mittels des Verdichterkolbens (30) aus dem ersten Verdichterraum (31) verdrängt wird und in den ersten Speicherraum (52,52a) eingeleitet wird, so dass das Fluid (F) in dem ersten Speicherraum (52,52a) verdichtet wird.

2. Verfahren nach Anspruch 1, wobei eine Mehrzahl an Speichern (5,51) bereitgestellt wird, wobei die Speicher (5,51) jeweils einen im jeweiligen Speicher (5,51) bewegbaren Speicherkolben (50,50a) aufweisen, der einen jeweiligen ersten Speicherraum (52,52a) von einem jeweiligen zweiten Speicherraum (53,53a) trennt, und wobei der jeweilige zweite Speicherraum (53,53a) mit dem Hydraulikfluidbehälter (9) in Strömungsverbindung bringbar ist, so dass Hydraulikfluid (H) aus dem Hydraulikfluidbehälter (9) in den jeweiligen zweiten Speicherraum (53,53a) einleitbar ist, und wobei der erste Verdichterraum (31) parallel mit den jeweiligen ersten Speicherräumen (52,52a) in Strömungsverbindung gebracht wird, wobei der Verdichterkolben (30) durch das eingeleitete Hydraulikfluid (H) bewegt wird, so dass das Fluid (F) mittels des Verdichterkolbens (30) aus dem ersten Verdichterraum (31) verdrängt wird und gleichzeitig in die jeweiligen ersten Speicherräume (52,52a) eingeleitet wird, so dass das Fluid (F) in den jeweiligen ersten Speicherräumen (52,52a) verdichtet wird.

3. Verfahren nach Anspruch 1 oder 2, wobei das Fluid (F) gleichzeitig mit dem Einleiten des Fluids (F) aus der Fluidquelle (1) in den ersten Verdichterraum (31) auch in den ersten Speicherraum (52,52a) eingeleitet wird.

4. Verfahren nach Anspruch 3, wobei beim gleichzeitigen Einleiten des Fluids (F) aus der Fluidquelle (1) in den ersten Verdichterraum (31) und den ersten Speicherraum (52,52a) der Speicherkolben (50,50a) so bewegt wird, dass sich das Volumen des ersten Speicherraums (52,52a) vergrößert.

5. Verfahren nach einem der vorhergehenden Ansprüche, wobei nach dem Verdichten des Fluids (F) der erste Speicherraum (52,52a) mit einem Tank eines Fahrzeugs (21) in Strömungsverbindung gebracht wird, wobei das Fluid (F) aus dem ersten Speicherraum (52,52a) in den Tank eingeleitet wird.

6. Verfahren nach Anspruch 5, wobei während des Einleitens des Fluids (F) aus dem ersten Speicherraum (52,52a) in den Tank Hydraulikfluid (H) aus dem Hydraulikfluidbehälter (9) in den zweiten Speicherraum (53,53a) eingeleitet wird, und wobei der Speicherkolben (50,50a) durch das eingeleitete Hydraulikfluid (H) bewegt wird, und wobei das Volumen des ersten Speicherraums (52,52a) durch die Bewegung des Speicherkolbens (50,50a) so verkleinert wird, dass der Druck des Fluids (F) in dem ersten Speicherraum (52,52a) beim Einleiten des Fluids (F) aus dem ersten Speicherraum (52,52a) in den Tank konstant bleibt.

7. Verfahren nach einem der vorhergehenden Ansprüche, wobei das Fluid (F) ein gasförmiger Kraftstoff zum Antreiben eines Fahrzeugs ist.

8. Verfahren nach einem der vorhergehenden Ansprüche, wobei das Fluid Wasserstoff, Methan oder Erdgas ist.

9. Verfahren nach einem der vorhergehenden Ansprüche, wobei das Fluid (F) in dem ersten Verdichterraum (31) auf einen Druck von 400 bar bis 900 bar, insbesondere 700 bar bis 875 bar, verdichtet wird.

10. Verfahren nach einem der vorhergehenden Ansprüche, wobei das Fluid (F) in dem ersten Speicherraum (52,52a) bei einem Druck von 400 bar bis 900 bar, insbesondere 700 bar bis 875 bar, gespeichert wird.

11. Verfahren nach einem der vorhergehenden Ansprüche, wobei das Fluid (F) bei einem ersten Druck von 1 bar bis 45 bar, insbesondere 20 bar bis 45 bar, in der Fluidquelle (1) bereitgestellt wird.
